# EUROPEAN PATENT SPECIFICATION

(11) **EP 1 899 430 B1**
(45) Date of publication and mention of the grant of the patent: **11.06.2014**
(21) Application number: 06750357.3
(22) Date of filing: 14.04.2006
(51) Int. Cl.: C09J 153/02, C09J 7/02

(54) **CREEP RESISTANT ADHESIVES TAPES**
KRIECHRESISTENTE KLEBEBÄNDER
RUBANS ADHÉSIFS RÉSISTANT AU FLUAGE

(30) Priority: 20.04.2005 US 673057 P
(43) Date of publication of application: 19.03.2008
(73) Proprietor: AVERY DENNISON CORPORATION, Pasadena, CA 91103 (US)
(72) Inventor: VANMARCKE, Ben, Monrovia, California 91016 (US); WILLEKENS, Jos, 2322 Hoogstraten (BE)
(74) Representative: Müller-Boré & Partner Patentanwälte PartG mbB
(86) International application number: PCT/US2006/014296
(87) International publication number: WO 2006/115861

(56) References cited:
- EP-A- 0 306 232
- WO-A-98/44065

## Description

The invention relates to pressure sensitive adhesive tapes using pressure sensitive adhesive compositions that exhibit improved creep resistance.

Pressure sensitive adhesives (PSAs) are viscoelastic-elastomeric materials that can adhere strongly to a variety of substrates upon application of light contact pressure and short contact time. PSA applications range from various tape and label products used for industrial, medical and consumer markets. In these applications, PSAs are normally coated onto face or backing materials at 15-100 µm dry film thickness. Typical face stock materials include paper, film, foil, woven and nonwoven materials.

Polymers used in making PSAs are primarily divided into styrenic block copolymer (SBC) and acrylic. SBCs are mainly used for paper label and oriented polypropylene (OPP) tapes due to their highly aggressive tack and moderate shear holding power. SBCs exist in a two phase morphology, the first a hard polystyrene domain residing in the second, a conjugated diene rubber matrix. This morphology allows the SBC to be compounded with a high loading of hydrocarbon tackifiers to increase tack without significantly reducing shear.

The prior art is replete with the use of block copolymers in adhesive compositions which include the elastomer and a tackifying resin. As development of these elastomer based compositions has progressed, it has been found that their physical properties, such as tack, ultimate adhesion, peel strength, and creep resistance, are extremely sensitive to the particular elastomer or elastomers used, and the proportion and type of modifiers, such as solid or liquid tackifiers, aromatic or aliphatic tackifiers, plasticizers, extender oils, curing agents and the like.

Physical properties such as tack, peel strength and creep resistance are particularly important in specific applications where the adhesive composition is applied onto a film or nonwoven, such as tab closure used for a disposable diaper or adult incontinent product. In these types of applications, the creep performance or "holding power" of the adhesive is critical so that the adhesive tabs do not debond from the film or nonwoven.

The use of tackifying resins is known to provide specific adhesion and to modify peel values. Commonly used tackifying resins include those which are rosin derived including rosin acid and rosin ester resins, petroleum derived hydrocarbon resins and terpene based resins. These resins may be modified further to add functionality or aromaticity through the addition of phenolic groups or styrene groups, for instance.

PSAs formulated with previously utilized tackifying resins, however, have utilized increased amounts of rubber-based elastomer material, e.g., at least 50% by weight. Such formulations result in processing difficulties due to increased viscosity. Therefore, it is desirable to provide pressure sensitive adhesive tapes having ease of manufacture and which exhibit improved creep resistance, good tack and high peel, especially onto nonwoven materials, such as are used in typical diaper constructions.

EP 0 306 232 A2 discloses a pressure-sensitive adhesive composition comprising an elastomer, which is an A-B-A block copolymer, wherein the A blocks are derived from styrene or alphamethylstyrene and the B blocks are derived from isoprene, butadiene, or hydrogenated versions thereof, or an (AB) block copolymer of the same type of composition in another geometry such as a tapered block copolymer or a radial block copolymer, a solid tackifier resin, a liquid tackifier resin, and an end block reinforcing resin.

WO 98/44065 A discloses an envelope having a flap and made of high density spun polyolefin material, said flap coated with a hot melt pressure sensitive adhesive for sealing said envelope, said hot melt adhesive comprising a) from about 10 % to about 40 % by weight in the adhesive of at least one block copolymer having the general formula A-B-A triblocks, A-B diblocks, A-B-A-B-A-B multiblocks, radial blocks and mixtures thereof, wherein A is polystyrene and B is a conjugated diene, the block copolymers comprising from about 15 % to about 35 % styrene by weight in the block copolymer and a diblock content from about 0 % to about 90 % by weight in the copolymer, and b) from about 60 % to about 90 % by weight in the adhesive of a modifier selected from the group consisting of solid tackifying resins having a melt point from about 70 °C to about 150 °C, liquid tackifying resins, liquid elastomers and mixtures thereof, wherein the resultant adhesive is oil-free and provides a destructive bond to, and resists deformation of said envelope.

The present invention is directed to a pressure sensitive adhesive tape construction comprising: a substrate and an adhesive composition coated on the substrate, the adhesive composition comprising: from 20% to 60% by weight of a block copolymer; at least 25% to 60% by weight of a solid tackifying resin comprising a mixture of a solid tackifying resin having a Ring and Ball softening point of at least 115°C and a solid tackifying resin having a Ring and Ball softening point of from 75°C to 100°C, wherein the solid tackifying resin having a softening point of at least 115°C is present in an amount of at least 20% by weight of the adhesive composition; and from 5% to 20% of a liquid tackifying resin.

The polymers used in formulating the pressure sensitive adhesive compositions of the invention are based upon, but not limited to, as a major component, synthetic elastomeric polymers. In one embodiment, the pressure sensitive adhesive composition of the present invention comprises rubber based elastomer materials such as linear, branched, graft or radial block copolymers represented by the diblock structures A-B, the triblock A-B-A, the radial or coupled structures (A-B)ₙ, and combinations of these where A represents a hard thermoplastic portion or block which is non-rubbery or glassy or crystalline at room temperature but fluid at higher temperatures, and B represents a soft portion or block which is rubbery or elastomeric at service or room temperature. These thermoplastic elastomers may comprise from 60% to 85% by weight of rubbery segments and from 15% to 40% by weight of non-rubbery segments.

The non-rubbery segments or hard blocks comprise polymers of mono-and polycyclic aromatic hydrocarbons, and more particularly vinyl-substituted aromatic hydrocarbons which may be monocyclic or bicyclic in nature. The preferred rubbery blocks or segments are polymer blocks of homopolymers or copolymers of aliphatic conjugated dienes. Rubbery materials such as polyisoprene, polybutadiene, combinations thereof, and hydrogenated versions thereof, may be used to form the rubbery block or segment. Particularly preferred rubbery segments include polyisoprenes.

The block copolymers of vinyl aromatic hydrocarbons and conjugated dienes which may be utilized include any of those which exhibit elastomeric properties. The block copolymers may be diblock, triblock, multiblock, starblock, polyblock or graftblock copolymers. Throughout this specification and claims, the terms diblock, triblock, multiblock, polyblock, and graft or grafted-block with respect to the structural features of block copolymers are to be given their normal meaning as defined in the literature such as in the Encyclopedia of Polymer Science and Engineering, Vol. 2, (1985) John Wiley & Sons, Inc., New York, pp. 325-326, and by J.E. McGrath in Block Copolymers, Science Technology, Dale J. Meier, Ed., Harwood Academic Publishers, 1979, at pages 1-5.

Such block copolymers may contain various ratios of conjugated dienes to vinyl aromatic hydrocarbons including those containing up to about 40% by weight of vinyl aromatic hydrocarbon. Accordingly, multi-block copolymers may be utilized which are linear or radial symmetric or asymmetric and which have structures represented by the formulae A-B, A-B-A, A-B-A-B, B-A-B, (AB)_{0,1,2}, BA, etc., wherein A is a polymer block of a vinyl aromatic hydrocarbon or a conjugated diene/vinyl aromatic hydrocarbon tapered copolymer block, and B is a rubbery polymer block of a conjugated diene.

The block copolymers may be prepared by any of the well-known block polymerization or copolymerization procedures including sequential addition of monomer, incremental addition of monomer, or coupling techniques as illustrated in, for example, U.S. Patents 3,251,905; 3,390,207; 3,598,887; and 4,219,627. As is well known, tapered copolymer blocks can be incorporated in the multi-block copolymers by copolymerizing a mixture of conjugated diene and vinyl aromatic hydrocarbon monomers utilizing the difference in their copolymerization reactivity rates. Various patents describe the preparation of multi-block copolymers containing tapered copolymer blocks including U.S. Patents 3,251,905; 3,639,521; and 4,208,356.

Conjugated dienes which may be utilized to prepare the polymers and copolymers are those containing from 2 to about 6 carbon atoms and more generally, from 4 to 5 carbon atoms. Examples include 1,3-butadiene, 2-methyl-1,3-butadiene (isoprene), 2,3-dimethyl-1,3-butadiene, chloroprene, 1,3-pentadiene, 1,3-hexadiene, etc. Mixtures of these conjugated dienes also may be used. In one embodiment, the conjugated dienes can be isoprene and 1,3-butadiene and hydrogenated versions thereof.

Examples of vinyl aromatic hydrocarbons which may be utilized to prepare the copolymers include styrene and the various substituted styrenes such as o-methylstyrene, p-methylstyrene, p-tert-butylstyrene, 1,3-dimethylstyrene, alpha-methylstyrene, beta-methylstyrene, p-isopropylstyrene, 2,3-dimethylstyrene, o-chlorostyrene, p-chlorostyrene, obromostyrene, 2-chloro-4-methylstyrene, etc. In one embodiment, the vinyl aromatic hydrocarbon can be styrene.

Many of the above-described copolymers of conjugated dienes and vinyl aromatic compounds are commercially available. The number average molecular weight of the block copolymers, prior to hydrogenation, is in one embodiment from 10,000 to 600,000, and in one embodiment from 50,000 to 250,000.

The average molecular weights of the individual blocks within the copolymers may vary within certain limits. In most instances, the vinyl aromatic block will have a number average molecular weight in the order of 2000 to 125,000, and in one embodiment from between 4000 and 60,000. The conjugated diene blocks either before or after hydrogenation will have number average molecular weights in the order of 10,000 to 450,000 and in one embodiment from 35,000 to 150,000.

Specific examples of diblock and triblock polymers include styrene-butadiene (SB) including Finaprene 1205 available from Total Petrochemical Elastomers, and styrene-isoprene-styrene (SIS) such as Vector 4111 available from Dexco of Houston, Texas. Examples of commercially available block copolymers useful in the adhesives of the present invention also include those available from Kraton Polymers under the tradename Kraton MD6455, a styrene-isoprene-butadiene-styrene (SIBS) having 19% styrene, and Kraton 1118 SBS having 31 % styrene and 78% diblock.

Upon hydrogenation of the SBS copolymers comprising a rubbery segment of a mixture of 1,4 and 1,2 isomers, a styrene-ethylene-butylene styrene (SEBS) block copolymer is obtained. A number of selectively hydrogenated block copolymers are available commercially from Kraton Polymers under the general trade designation "Kraton G." One example is Kraton G1652 which is a hydrogenated SBS triblock comprising about 30% by weight of styrene end blocks and a midblock which is a copolymer of ethylene and 1-butene (EB). A lower molecular weight version of G1652 is available from Kraton Polymers under the designation Kraton G1650. Kraton G1651 is another SEBS block copolymer which contains about 33% by weight of styrene. Kraton G1657 is an SEBS diblock copolymer which contains about 13% by weight styrene. This styrene content is lower than the styrene content in Kraton G1650 and Kraton G1652

The selective hydrogenation of the block copolymers may be carried out by a variety of well known processes including hydrogenation in the presence of such catalysts as Raney nickel, noble metals such as platinum, palladium, etc., and soluble transition metal catalysts. Suitable hydrogenation processes which can be used are those wherein the diene-containing polymer or copolymer is dissolved in an inert hydrocarbon diluent such as cyclohexane and hydrogenated by reaction with hydrogen in the presence of a soluble hydrogenation catalyst. Such procedures are described in U.S. Patents 3,113,986 and 4,226,952, the disclosures of which are incorporated herein by reference. Such hydrogenation of the block copolymers which are carried out in a manner and to extent as to produce selectively hydrogenated copolymers having a residual unsaturation content in the polydiene block of from about 0.5% to about 20% of their original unsaturation content prior to hydrogenation.

The pressure-sensitive adhesive compositions comprise from 20% to 60% by weight of the total composition of an elastomeric component. In one embodiment, the elastomeric component comprises from 33% to 43% by weight of the total composition.

As mentioned above, in one embodiment, the adhesive compositions comprise thermoplastic elastomers comprising at least one thermoplastic elastomeric block copolymer which include linear, branched, graft or radial block copolymers. According to the present invention, the elastomer(s) is (are) tackified with a tackifying system. The adhesive composition contains a blend of two solid tackifying resins and a liquid tackifying resin.

The solid tackifying resin component includes those aliphatic hydrocarbon resins made from the polymerization of a feed stream consisting mainly of unsaturated species containing 5 to 9 carbon atoms; mixed aliphatic/aromatic tackifying resins; and hydrogenated tackifying resins. The hydrogenated resins can include resins made from the polymerization and subsequent hydrogenation of a feedstock consisting mainly of dicyclopentadiene; resins produced from the polymerization and subsequent hydrogenation of pure aromatic feedstocks such as styrene, alpha-methyl styrene, vinyl toluene; resins fashioned from the polymerization and subsequent hydrogenation of an unsaturated aromatic feedstream wherein the feedstream mainly contains species having from 5 to 9 carbon atoms; and hydrogenated aliphatic and aliphatic/aromatic resins.

The solid tackifier component is present in an amount from at least 25% to 60% by weight of the adhesive. In one embodiment, the solid tackifier will be present in an amount from 37% to 57% by weight of the adhesive. The solid tackifier reduces the modulus of the mixture sufficiently to build tack or adhesion and increase creep resistance.

A variety of useful solid tackifier resins are available commercially including petroleum hydrocarbons resins such as the resins sold under the tradename Regalite by Eastman Chemical Company. One particular example of a useful solid tackifier is Regalite S7125 which is a partially hydrogenated C₉ synthetic tackifier having an Mw of 1240 and having a Ring and Ball softening point of 123°C. Another useful solid tackifier is Regalite R1125, identified as a fully hydrogenated hydrocarbon resin having an Mw of 1300 and a softening point of 123°C. Escorez 1401 (non-hydrogenated) and Escorez 5415 (fully hydrogenated) are solid tackifiers available from ExxonMobil Chemical, and having softening points of 117°C and 118°C, respectively.

According to the present invention, the solid tackifier component includes a mixture of a solid tackifier resin having a Ring and Ball softening pont of at least 115°C and a solid tackifying resin having a Ring and Ball softening point of from 75°C to 100°C. Such a useful solid tackifier is Regalite R1100 which is a fully hydrogenated hydrocarbon resin having a Ring and Ball softening point of 100°C. According to the present invention, the solid tackifier resin having a Ring and Ball softening point of at least 115°C is present in an amount from at least 20% by weight of the adhesive composition.

According to the present invention, the adhesive compositions include one or more liquid tackifier resins such as Regalite R1010 or Piccotac 1020-E, both from Eastman Chemical Co, and are low molecular weight hydrocarbon resins. Also useful are the Wingtack® family of resins from Goodyear Tire and Rubber Company (Akron, Ohio) such as Wingtack 10, a normally liquid resin at room temperature having a softening point of 10°C. The amount of the liquid tackifier included in the adhesive compositions ranges from 5% to 20% by weight based on the weight of the adhesive. In another embodiment, from 10% to 20% by weight of the liquid tackifier is included in the adhesive formulations.

The adhesive compositions also may include other materials such as antioxidants, heat and light stabilizers, ultraviolet light absorbers, viscosity modifiers, fillers, colorants, waxes, antiblocking agents, reinforcing agents, processing aids, mineral oil, etc. Hindered phenolic and amine antioxidant compounds may be included in the adhesive compositions, and a wide variety of such antioxidant compounds are known in the art. The amount of antioxidant can be varied, and in one embodiment from 0.1 to 3% by weight or more, based on the total weight of the adhesive, is used. A variety of antioxidants are available from Ciba-Geigy under the general trade designations "Irganox" and "Irgafos". For example, the hindered phenolic antioxidant n-octadecyl 3-(3,5-di-t-butyl-4-hydroxyphenol)- proprionate is available under the general trade designation "Irganox 1076". Irganox 1010, is identified as Tetrakis (methylene 3-(3',5'-di-tert-butyl-4'-hydroxyphenol) proprionate) methane. Irgafos 168 is another useful antioxidant from Ciba-Geigy.

The adhesive compositions may be hot melt or solvent based, and may be prepared in a conventional manner by means known to those skilled in the art. The elastomers, tackifiers, antioxidants, and other components are blended together in a mixer (e.g., z-blade mixer) at elevated temperature, preferably in an inert atmosphere, at a residence time of up to 150 minutes.

In one embodiment, an adhesive tape construction is formed by placing the adhesive compositions described above on a substrate. The substrates to which the adhesive compositions of the invention can be applied include paper, vinyl, polymer films, such as polyolefin, polyester, polyvinyl chloride, polyvinyl fluoride (PVF), polyvinylidene difluoride (PVDF), polyethylene terephthalate (PET), etc., and combinations thereof, non-woven fabrics, clay coated paper, glassine, polymer coated paper, paperboard, tissue, etc.

The adhesive compositions used for the adhesive tape construction of the present invention may be applied to the desired substrate as a coating by any conventional technique known in the coating art such as roller coating, curtain coating, spray coating, die coating, dipping, etc.

The coating weight of the adhesive compositions on the substrate is generally in the range of 15 to 100 grams per square meter (gsm), and in one embodiment from 20 to 50 gsm, and in one embodiment from 30 to 40 gsm.

The following examples are reference examples only and illustrate specific pressure sensitive adhesive formulations which are useful in preparing adhesive compositions. Unless otherwise indicated in the following examples, in the claims, and elsewhere in the written description, all parts and percentages are by weight, and temperatures are in degrees centigrade.

### REFERENCE EXAMPLE 1

Creep resistance is used to evaluate an adhesive's ability to withstand the stress imparted on the adhesive-nonwoven bond when held in a stressed state at the use temperature of the nonwoven article.

Adhesive compositions having the formulations indicated below were prepared, with Sample A being a reference example and Sample B serving as a comparative example:

**Table 1**

| Component | Sample A | Sample B |
|---|---|---|
| Escorez 5415 | 44.6 | ------- |
| Irganox B612 | 0.74 | 0.74 |
| Vector 4111A | 39.7 | 39.7 |
| Reqalite R1100 | | 44.6 |
| Regalite S7215 | ------- | ------- |
| Kraton MD6455 | ------- | ------- |
| Piccotac 1020-E | 14.9 | 14.9 |

Adhesive tape samples were prepared by coating the adhesives listed in Table 1 onto cast polypropylene films at a coat weight of 40 g/m². The tapes were then laminated onto a nonwoven backsheet to create a sample measuring 25mm x 25mm. The nonwoven backsheet was then clamped into an oven at 37°C and a 0.5 kg weight attached to the tape. The time was recorded until tape and nonwoven substrate delaminated. The tack, as measured by PSTC5, and time for delamination of each adhesive tape from the nonwoven substrate is depicted in Table II:

**Table II**

| Sample | Time for Delamination (minutes) | Tack (N/25 mm) |
|---|---|---|
| A | 10,000 | 37.0 |
| B | 1,300 | 35.0 |

### REFERENCE EXAMPLE 2

Adhesive compositions having the formulations below in Table III were prepared:

**Table III**

| Component | Sample C | Sample D |
|---|---|---|
| Escorez 5415 | 52.0 | |
| Irganox B612 | 1.0 | |
| Vector 4111A | 35.5 | |
| Piccotac 1020-E | 12.5 | 11.0 |
| Kraton MD6455 | | 40.0 |
| Regalite S7125 | | 49.0 |

Adhesive tape samples were prepared as described in Reference Example 1. The tapes were then laminated onto a nonwoven backsheet to create a sample measuring 25mm x 25mm. The nonwoven backsheet was then clamped into an oven at 37°C and a 1.0 kg weight attached to the tape. The time was recorded until tape and nonwoven substrate delaminated. The time for delamination of each adhesive tape from the nonwoven substrate, tack and peel strength, as measured by ASTM D1000, of each sample is depicted in Table IV:

**Table IV**

| Sample | Time for Delamination (minutes) | Tack (N/25 mm) | Peel (N/25 mm) |
|---|---|---|---|
| C | 1,251 | 20.9 | 7.9 |
| D | 3000 | 46.6 | 3.8 |

While the invention has been explained in relation to its preferred embodiments, it is to be understood that various modifications thereof will become apparent to those skilled in the art upon reading the specification. Therefore it is to be understood that the invention disclosed herein is intended to cover such modifications as fall within the scope of the appended claims.

## Claims

1. A pressure sensitive adhesive tape construction comprising: a substrate and an adhesive composition coated on the substrate, the adhesive composition comprising:
from 20% to 60% by weight of a block copolymer;
at least 25% to 60% by weight of a solid tackifying resin comprising a mixture of a solid tackifying resin having a Ring and Ball softening point of at least 115°C and a solid tackifying resin having a Ring and Ball softening point of from 75°C to 100°C, wherein the solid tackifying resin having a softening point of at least 115°C is present in an amount of at least 20% by weight of the adhesive composition; and
from 5% to 20% of a liquid tackifying resin.

2. The tape construction of claim 1 wherein the block copolymer comprises one or more of styrene-butadiene, styrene-butadiene-styrene, styrene-isoprene-styrene, styrene-isoprene-butadiene-styrene, or styrene-ethylene-butylene-styrene.

3. The tape construction of claim 2 wherein the block copolymer comprises styrene-isoprene-styrene.

4. The tape construction of claim 1 wherein the solid tackifying resin comprises a hydrogenated hydrocarbon resin.

5. The tape construction of claim 1 wherein the liquid tackifying resin is a hydrocarbon resin.

6. The tape construction of claim 5 wherein the liquid tackifying resin is a hydrogenated hydrocarbon resin.

7. The tape construction of claim 1 further comprising an antioxidant in an amount from 0.1 % to 3% based on the total weight of the composition.

8. The tape construction of claim 1 wherein the adhesive composition is applied to the substrate by one or more of roller coating, curtain coating, spray coating, die coating, spraying, reverse roll coating, and/or dipping, at a coating weight of from 15 to 100 grams per square meter.

9. The tape construction of claim 8 wherein the adhesive composition is applied at a coating weight of from 20 to 50 grams per square meter.

10. The tape construction of claim 1, wherein the substrate comprises one or more of a paper, a vinyl, a polyolefin film, a tissue, a nonwoven, a clay coated paper, a glassine, a polymer coated paper, or a paper board.

11. The tape construction of claim 10 wherein the substrate is a nonwoven tab closure for a disposable diaper or an adult incontinent product.

## Patentansprüche

1. Haftkleberbandkonstruktion, umfassend:
ein Substrat und eine Haftmittelzusammensetzung, beschichtet auf dem Substrat, wobei die Haftmittelzusammensetzung umfaßt:
von 20 Gew.-% bis 60 Gew.-% eines Blockcopolymers,
mindestens 25 Gew.-% bis 60 Gew.-% eines festen klebrigen Harzes, umfassend ein Gemisch von einem festen klebrigen Harz mit einem Ring-und-Ball-Erweichungspunkt von mindestens 115°C und einem festen klebrigen Harz mit einem Ring-und-Ball-Erweichungspunkt von 75°C bis 100°C, wobei das feste klebrige Harz mit einem Erweichungspunkt von mindestens 115°C in einer Menge von mindestens 20 Gew.-% der Haftmittelzusammensetzung vorliegt, und von 5% bis 20% eines flüssigen klebrigen Harzes.

2. Bandkonstruktion gemäß Anspruch 1, wobei das Blockcopolymer ein oder mehrere von Styrol-Butadien, Styrol-Butadien-Styrol, Styrol-Isopren-Styrol, StyrolIsopren-Butadien-Styrol oder Styrol-Ethylen-Butylen-Styrol umfaßt.

3. Bandkonstruktion gemäß Anspruch 2, wobei das Blockcopolymer Styrol-Isopren-Styrol umfaßt.

4. Bandkonstruktion gemäß Anspruch 1, wobei das feste klebrige Harz ein hydriertes Kohlenwasserstoffharz umfaßt.

5. Bandkonstruktion gemäß Anspruch 1, wobei das flüssige klebrige Harz ein Kohlenwasserstoffharz ist.

6. Bandkonstruktion gemäß Anspruch 5, wobei das flüssige klebrige Harz ein hydriertes Kohlenwasserstoffharz ist.

7. Bandkonstruktion gemäß Anspruch 1, weiter umfassend ein Antioxidationsmittel in einer Menge von 0,1% bis 3%, bezogen auf das Gesamtgewicht der Zusammensetzung.

8. Bandkonstruktion gemäß Anspruch 1, wobei die Haftmittelzusammensetzung auf das Substrat durch eines oder mehrere von Walzenbeschichtung, Vorhangbeschichten, Sprühbeschichten, Schmelzbeschichten, Sprühen, Umkehrwalzenbeschichten und/oder Eintauchen bei einem Beschichtungsgewicht von 15 bis 100 g pro Quadratmeter aufgebracht wird.

9. Bandkonstruktion gemäß Anspruch 8, wobei die Haftmittelzusammensetzung mit einem Beschichtungsgewicht von 20 bis 50 g pro Quadratmeter aufgebracht wird.

10. Bandkonstruktion gemäß Anspruch 1, wobei das Substrat eines oder mehrere von einem Papier, einem Vinyl, einer Polyolefinfolie, einem Gewebe, einem Textilverbundstoff, einem Ton-beschichteten Papier, einem Pergamentpapier, einem Polymer-beschichtetes Papier oder einer Papierpappe umfaßt.

11. Bandkonstruktion gemäß Anspruch 10, wobei das Substrat ein Vlies-Bandverschluß für eine Einwegwindel oder ein Erwachsenen-Inkontinenzprodukt ist.

## Revendications

1. Structure de ruban auto-adhésif, comprenant : un substrat et une composition adhésive enduite sur le substrat, la composition adhésive comprenant :
de 20% à 60% en poids d'un copolymère séquence ;
au moins 25% à 60% en poids d'une résine tackifiante solide comprenant un mélange d'une résine tackifiante solide ayant un point de ramollissement bille et anneau d'au moins 115°C et une résine tackifiante solide ayant un point de ramollissement bille et anneau allant de 75°C à 100°C, où la résine tackifiante solide ayant un point de ramollissement d'au moins 115°C est présente en une quantité d'au moins 20% en poids de la composition adhésive, et
de 5% à 20% d'une résine tackifiante liquide.

2. Structure de ruban selon la revendication 1, où le copolymère séquencé comprend un ou plusieurs parmi le styrène-butadiène, le styrène-butadiène-styrène, le styrène-isoprène-styrène, le styrène-isoprène-butadiène-styrène, ou le styrène-éthylène-butylène-styrène.

3. Structure de ruban selon la revendication 2, où le copolymère séquencé comprend le styrène-isoprène-styrène.

4. Structure de ruban selon la revendication 1, où la résine tackifiante solide comprend une résine hydrocarbonée hydrogénée.

5. Structure de ruban selon la revendication 1, où la résine tackifiante liquide est une résine hydrocarbonée.

6. Structure de ruban selon la revendication 5, où la résine tackifiante liquide est une résine hydrocarbonée hydrogénée.

7. Structure de ruban selon la revendication 1, comprenant en outre, un antioxydant en une quantité allant de 0,1% à 3%, sur base du poids total de la composition.

8. Structure de ruban selon la revendication 1, où la composition adhésive est appliquée sur le substrat par un ou plusieurs parmi le revêtement au rouleau, le revêtement au rideau, le revêtement par pulvérisation, le revêtement par buse, la pulvérisation, le revêtement par rouleau inverse, et/ou le revêtement au trempé, à un poids de revêtement allant de 15 à 100 g par mètre carré.

9. Structure de ruban selon la revendication 8, où la composition adhésive est appliquée à un poids de revêtement allant de 20 à 50 g par mètre carré.

10. Structure de ruban selon la revendication 1, où le substrat comprend un ou plusieurs parmi un papier, un vinyle, un film en polyoléfine, un tissu, un non-tissé, un papier revêtu de kaolin, un papier cristal, un papier revêtu d'un polymère ou un carton.

11. Structure de ruban selon la revendication 10, où le substrat est une languette de fermeture en non-tissé pour un lange jetable ou un produit pour l'incontinence des adultes.
